# EUROPÄISCHE PATENTSCHRIFT

(11) **EP 1 567 598 B1**
(45) Veröffentlichungstag und Bekanntmachung des Hinweises auf die Patenterteilung: **15.11.2006**
(21) Anmeldenummer: 03779941.8
(22) Anmeldetag: 17.11.2003
(51) Int. Cl.: C09B 35/38, C09B 35/52, C09B 67/00

(54) **VERFAHREN ZUR HERSTELLUNG EINER FLÜSSIGFORMULIERUNG VON SALZEN SULFONSAURER AZOFARBSTOFFE**
METHOD FOR PRODUCING A LIQUID FORMULATION OF SALTS OF SULFOACIDIC AZO DYES
PROCEDE POUR PRODUIRE UNE FORMULATION LIQUIDE DE SELS DE COLORANTS AZOIQUES D'ACIDE SULFONIQUE

(30) Priorität: 28.11.2002 EP 02026581
(43) Veröffentlichungstag der Anmeldung: 31.08.2005
(73) Patentinhaber: BASF Aktiengesellschaft, 67056 Ludwigshafen (DE)
(72) Erfinder: SCHMITT, Michael, 67549 Worms (DE); REICHELT, Helmut, 67435 Neustadt (DE)
(86) Internationale Anmeldenummer: PCT/EP2003/012803
(87) Internationale Veröffentlichungsnummer: WO 2004/048478

(56) Entgegenhaltungen:
- BE-A- 631 379
- DE-C- 46 804
- JP-A- 61 296 069

## Beschreibung

Die vorliegende Erfindung betrifft ein Verfahren zur Herstellung einer Flüssigformulierung von Salzen sulfonsaurer Azofarbstoffe.

Vesuvin und dessen Kupplungsprodukte wie C.I. Direct Brown 44 sind seit Anbeginn der Farbstoffchemie bekannt. So ist dem Colour Index zu entnehmen, dass formal zwei Teile Sulfanilsäure auf ein Teil Vesuvin (Bismarck Brown C.I. 21000) gekuppelt werden, um zu C.I. Direct Brown 44 zu gelangen. Die hierin zitierte deutsche Patentschrift 46804 lehrt die Umsetzung von Vesuvin mit Sulfanilsäure. Das Produkt ist jedoch mit großen Mengen Vesuvin verunreinigt, die durch Filtration abgetrennt werden. Der Farbstoff wird aus der wässrigen Lösung durch Aussalzen gewonnen. Ein durch Aussalzen erhaltener Farbstoff ist jedoch zur Herstellung von Flüssigformulierungen ungeeignet, da er mit einer viel zu hohen Salzfracht behaftet ist. Ferner sind derartige Isolierschritte sehr aufwendig.

Die JP 61 296 069 lehrt die Herstellung des Lithiumsalzes von Direct Brown 44, indem ausgehend vom Natriumsalz die Säure gefällt wird und anschließend mit Lithiumhydroxid das Lithiumsalz hergestellt wird.
Daher war es Aufgabe der vorliegenden Erfindung, ein Verfahren zur Verfügung zu stellen, dessen Ergebnis eine salzarme und vesuvinarme Flüssigformulierung des Farbstoffs ist. Weiterhin soll das Verfahren eine gute Raum-Zeit-Ausbeute aufweisen bei möglichst wenig Abwasser.

Demgemäss wurde ein Verfahren zur Herstellung von Flüssigformulierungen von Salzen sulfonsaurer Azofarbstoffe gefunden umfassend: a) Herstellen von Vesuvin aus m-Phenylendiamin; b) ohne Zwischenisolierung des Vesuvins Kuppeln einer wenigstens äquimolaren Menge von diazotierten Aminoarylsulfonsäuren I

H₂N - Ar- SO₃H (I),

wobei Ar Phenylen, das einfach mit Sulfo, oder Naphthylen, das ein- oder zweifach mit Sulfo und/oder einfach mit Hydroxy substituiert sein kann, bedeutet auf Vesuvin und c) Isolierung der Farbstoffe in ihrer Säureform und anschließendes Lösen in wässrigen Basen.

Als Diazokomponenten 1 sind Aminoarylsulfonsäuren wie o-, m- und p-Aminobenzolsulfonsäure, 1-Aminobenzol-3,5-disulfonsäure, 1-Aminobenzol-2,4-disulfonsäure, 1-Aminobenzol-2,5-disulfonsäure, 1-Naphthylamin-2-sulfonsäure, 1-Naphthylamin-3-sulfonsäure, 1-Naphthylamin-4-sulfonsäure, 1-Naphthylamin-5-sulfonsäure 1-Naphthylamin-6-sulfonsäure, 1-Naphthylamin-7-sulfonsäure, 1-Naphthylamin-8-sulfonsäure, 1-Naphthylamin-3,6-disulfonsäure, 1-Naphthylamin-3,8-disulfonsäure, 1-Naphthylamin-4,7-disulfonsäure, 1-Amino-8-hydroxynaphthalin-4,6-disulfon-säure, 1-Amino-8-hydroxynaphthalin-4-sulfonsäure, 1-Amino-8-hydroxynaphthalin-3,6-disulfonsäure, 2-Aminonaphthalin-1-sulfonsäure, 2-Naphthylamin-5-sulfonsäure, 2-Naphthylamin-6-sulfonsäure, 2-Naphthylamin-7-sulfonsäure, 2-Aminonaphthalin-8-sulfonsäure, 2-Naphthylamin-1,5-disulfonsäure, 2-Naphthylamin-3,6-disulfonsäure, 2-Naphtylamin-4,8-disulfonsäure, 2-Naphthylamin-5,7-disulfonsäure, 2-Naphthylamin-6,8-disulfonsäure, 2-Naphthylamin-3,6-disulfonsäure, 2-Naphthylamino-5,7-disulfonsäure, 2-Naphthylamin-3,6,8-trisulfonsäure , 2-Amino-8-hydroxynaphthalin-6-sulfonsäure, 2-Amino-5-hydroxynaphthalin-7-sulfonsäure, 2-Amino-3-hydroxynaphthalin-6-sulfonsäure und 2-Amino-5-hydroxynaphthalin-1,7-disulfonsäure zu nennen.

Bevorzugt werden Aminoarylsulfonsäuren, bei denen Ar Phenylen oder Naphthylen bedeutet, die jeweils mit einer Sulfogruppe substituiert sein können. Besonders bevorzugt werden o-, m- und p-Aminobenzolsulfonsäure, insbesondere Sulfanilsäure (p-Aminobenzolsulfonsäure).

Die Diazotierung der Aminoarylsulfonsäuren I erfolgt mit üblichen Diazotierungsmitteln wie salpetriger Säure, die im Sauren aus Alkalinitrit gebildet wird. Weiterhin sind Nitrosylschwefelsäure und Alkylnitrit, speziell Neopentylglykoldinitrit, geeignete Diazotierungsmittel.

Nach Zerstörung des überschüssigen Nitrits, beispielsweise mit Amidosulfonsäure, wird das das Diazoniumsalz enthaltende Reaktionsgemisch der in der Regel wässrigen Lösung von Vesuvin zugesetzt. Die Kupplung erfolgt bevorzugt im pH-Bereich von 4 bis 8, besonders bevorzugt von 5 bis 6.

Man stellt den pH-Wert für die Kupplung mit dem Fachmann bekannten Mitteln ein. Hierfür geeignete Basen sind beispielsweise basische Metallhydroxide wie Natronlauge, basische Metallcarbonate wie Natriumcarbonat, Natriumhydrogencarbonate, oder Natriumdihydrogenphosphate, Amine wie Ethanolamin, oder Alkalisalze von Carbonsäuren wie Natriumacetat, Lithiumacetat, Kaliumacetat, Natriumformiat, Natriumpropionat, Natriumoxalat, Natriumsuccinat, Natriumglutamat, Natriumadipinat, Natriumglykolat, Natriumlactat, Natriummalat, Natriumcitrat, Natriumtartrat, Natriumfumarat oder Natriummaleinat.

Die Diazokomponenten I können einzeln oder in ihren Mischungen eingesetzt werden. Bei Einsatz der Gemische erhält man Farbstoffgemische, die auch unsymmetrisch substituierte Farbstoffe enthalten. Nach einer bevorzugten Verfahrensvariante werden keine Diazokomponentengemische gekuppelt. Rein formal erhält man bei zweimolarer Kupplung einer Diazokomponente 1 auf Vesuvin einen symmetrischen Farbstoff. In der Regel liegt jedoch ein Gemisch aus dem einfachen, zweifachen, dreifachen und vierfachen Kupplungsprodukt vor.

Auf ein Mol Kupplungskomponente werden bevorzugt 1 bis 4, besonders bevorzugt 1,5 bis 2,5 insbesondere 1,8 bis 2,2 Mol Diazokomponente eingesetzt. Auf diese Weise kann man in der Regel ein Vesuvingehalt von < 10 Gew.-% im Produktgemisch erreichen.

Die Kupplung erfolgt in der Regel im Temperaturbereich von 0 bis 20°C. Um die Umsetzung zu vervollständigen wird bevorzugt auf Temperaturen von 20 bis 30°C erwärmt.

Erfindungsgemäß wird der sulfonsaure Azofarbstoff in seiner Säureform isoliert. Dies geschieht, indem man die Mischungen nach erfolgter Kupplung ansäuert. Bevorzugt stellt man einen pH-Wert im Bereich von 0 bis 4,5, besonders bevorzugt von 0 bis 2 ein. Nach einer besonders bevorzugten Verfahrensvariante wird der pH-Wert schrittweise gesenkt. Das kann geschehen, indem man die Säure in mindestens zwei Portionen über einen Zeitraum von 15 bis 45 Minuten zugibt. Ebenso ist es möglich, die Säure in mehreren Portionen bis hin zu kontinuierlich zu dosieren.

Nach einer weiteren bevorzugten Verfahrensvariante ist es vorteilhaft, wenn man die Säure des sulfonsauren Azofarbstoffs bei Temperaturen von 20 bis 70 °C kristallisiert.

Man erhält die Säure des sulfonsauren Azofarbstoffs als Feststoff, der auf allgemein übliche Weise wie Filtrieren oder Zentrifugieren isoliert werden kann. So kann der Azofarbstoff auf einfachem Wege von seiner Salzfracht befreit werden. Vorzugsweise wäscht man den erhaltenen Farbstoff mit Wasser, bis der Salzgehalt < 5 Gew.-% bevorzugt < 2 Gew.-% ist.

Der sulfonsaure Azofarbstoff wird anschließend in verdünnten Basen gelöst. Je nach Wahl der Base erhält man das entsprechende Salz des Farbstoffs. Besonders bevorzugt werden die Natrium- und/oder Ammoniumsalze.

Als Salze kommen dabei Metall- oder Ammoniumsalze in Betracht. Metallsalze sind insbesondere die Lithium-, Natrium- oder Kaliumsalze. Unter Ammoniumsalzen im erfindungsgemäßen Sinne sind solche Salze zu verstehen, die entweder unsubstituierte oder substituierte Ammoniumkationen aufweisen. Substituierte Ammoniumkationen sind z.B. Monoalkyl-, Dialkyl-, Trialkyl-, Tetraalkyl- oder Benzyltrialkylammoniumkationen oder solche Kationen, die sich von stickstoffhaltigen fünf- oder sechsgliedrigen gesättigten Heterocyclen ableiten, wie Pyrrolidinium-, Piperidinium-, Morpholinium- oder Piperaziniumkationen oder deren N-monoalkyl- oder N,N-dialkylsubstituierte Produkte. Unter Alkyl ist dabei im allgemeinen geradkettiges oder verzweigtes C₁-C₂₀-Alkyl zu verstehen, das durch ein oder zwei Hydroxylgruppen substituiert und/oder durch ein bis vier Sauerstoffatome in Etherfunktion unterbrochen sein kann. In der Regel werden Lithium-, Natrium-, Kaliumsalze oder NH₄⁺-Salze oder ihre Mischung hergestellt.

Erfindungsgemäß stellt man Vesuvin aus m-Phenylendiamin her und setzt dieses ohne Zwischenisolierung zum sulfonsauren Azofarbstoff um.

Das Vesuvin wird dabei auf allgemein bekannte Weise hergestellt, indem man formal einen von drei Teilen m-Phenylendiamin tetrazotiert und auf die restlichen zwei Teile kuppeln lässt. Hierzu werden 3 Mol m-Phenylendiamin mit 1,5 bis 2,5 Mol, bevorzugt 1,8 bis 2,2 Mol Natriumnitrit im Sauren umgesetzt. Bevorzugt wird dabei ein Verfahren bei dem man die Säure über einen längeren Zeitraum beispielsweise 30 bis 60 bevorzugt 40 bis 50 Minuten zudosiert. Zur Vervollständigung der Reaktion stellt man den pH-Wert des Reaktionsgemisches auf 2 bis 4 und rührt noch einige Zeit nach. Die gesamte Umsetzung zum Vesuvin führt man bei einer Temperatur von -5 bis +25 °C, vorzugsweise 0 bis 15°C durch. Nach beendeter Nitritzugabe wird das Reaktionsgemisch über einen Zeitraum von 0,5 bis 4 Stunden gerührt. Anschließend kann zum Reaktionsgemisch direkt das Diazoniumsalz der Aminoarylsulfonsäure I dosiert werden.

Die wässrige Salzlösung des sulfonsauren Azofarbstoffs kann direkt für Flüssigformulierungen weiterverwendet werden.

Sofern erwünscht, werden die Farbstofflösungen mit solubilisierenden Zusätzen versetzt. Hierfür wird entweder seine Lösung oder bereits der Feststoff mit solubilisierenden Zusätzen versetzt. Solche Zusätze sind beispielsweise mit Wasser mischbare organische Lösungsmittel wie C1-C4-Alkanole, z.B. Methanol, Ethanol, Propanol, Isopropanol, Butanol, Isobutanol, sec-Butanol oder tert-Butanol, Carbonsäureamide, wie N,N-Dimethylformamid oder N,N-Dimethylacetamid, Ketone oder Ketoalkohole, wie Aceton, Methylethylketon oder 2-Methyl-2-hydroxypentan-4-on, Ether, wie Tetrahydrofuran oder Dioxan, Mono-, Oligo- oder Polyalkylenglykole oderthioglykole, die C₂-C₆-Alkyleneinheiten aufweisen, wie Ethylenglykol, 1,2- oder 1,3-Propylenglykol, 1,2- oder 1,4-Butylenglykol, Neopentylglykol, Hexan-1,6-diol, Diethylenglykol, Triethylenglykol, Dipropylenglykol, Thiodiglykol, Polyethylenglykol oder Polypronylenglykol, andere Polyole, wie Glycerin oder Hexan-1,2,6-triol, C₁-C₄₋Alkylether von mehrwertigen Alkoholen, wie Ethylenglykolmonomethyl- oder - monoethylether, Diethylenglykolmonomethyl- oder -monoethylether, Diethylenglykolmonobutylether (Butyldiglykol) oder Triethylenglykolmonomethyl- oder - monoethylether, C₁-C₄-Alkylester von mehrwertigen Alkoholen, γ-Butyrolacton oder Dimethylsulfoxid. Geeignete solubilisierende Zusätze sind ferner Lactame, wie Caprolactam, Pyrrolidin-2-on oder N-Methylpyrrolidin-2-on, Harnstoff, cyclische Harnstoffe, wie 1,3-Dimethylimidazolidin-2-on oder 1,3-Dimethylhexahydropyrimid-2-on sowie Polyacrylsäuren, Polyacrylsäurederivate, Polyvinylamine, Polyvinylamide, Polyvinylacetate, Polyvinylalkohole, Polyvinylpyrrolidone, Polysiloxane oder Copolymere der jeweiligen Monomere. Desgleichen können Oligomere des Ethylenimins, Ethylenoxids oder Propylenoxids oder Derivate dieser Oligomere zur Anwendung kommen.

Bevorzugte solubilisierende Zusätze sind Harnstoffe, Mono, Di- oder Triethanolamin, Caprolactam, Mono-, Di- oder Trialkylenglykole, die C₂-C₅-Alkyleneinheiten aufweisen und/oder Oligo- und Polyalkylenglykole mit Ethylen- und/oder Propyleneinheiten sowie deren C₁-C₄-Alkylether und C₁-C₄-Alkylester. Ganz besonders bevorzugt sind Ethylenglykol, 1,2- oder 1,3-Propylenglykol, Neopentylglykol, Butyldiglykol, Alkylpolyethylenglykole (MW 200 - 500), Harnstoffe und Caprolactam.

Bevorzugte Flüssigeinstellungen enthalten im wesentlichen

| | |
|---|---|
| 15 bis 30 Gew.-% Gegenion) | sulfonsaure Azofarbstoffe (bezogen auf den Farbstoff ohne |
| 0 bis 30 Gew.-% | solubilisierende Zusätze |

bezogen auf die Gesamtmenge der wässrigen Flüssigeinstellung. Besonders bevorzugt werden Flüssigeinstellungen, die im wesentlichen 15 bis 30 Gew.-% sulfonsaure Azofarbstoffe und 1 bis 30 Gew.-% bevorzugt 1 bis 5 Gew.-% solubilisierende Zusätze speziell Ethylenglykol, 1,2- oder 1,3-Propylenglykol, Neopentylglykol, Butyldiglykol, Alkylpolyethylenglykole (MW 200 - 500), Harnstoffe und/oder Caprolactam enthalten. Diese Flüssigeinstellungen zeichnen sich durch eine hervorragende Lagerstabilität aus.. Die Flüssigeinstellungen eignen sich unter anderem zum Färben und Bedrucken cellulosischer Fasermaterialien wie holzhaltige und holzfreie Papiermassen.

Mithilfe des erfindungsgemäßen Verfahrens erhält man verkaufsfertige Flüssigformulierungen von sufonsauren Azofarbstoffen, die die direkte Herstellung von Färbebädern durch ledigliches Verdünnen mit Wasser ermöglichen. Die Flüssigformulierungen weisen einen geringen Salzgehalt auf. Das erfindungsgemäße Verfahren ermöglicht die Herstellung von Flüssigformulierung von Salzen der sufonsauren Tetraazofarbstoffe in guter Raum-Zeit-Ausbeute und hoher Stabilität bei Temperaturen im Bereich von 4 bis 50 °C.

Die nachfolgenden Beispiele sollen die Erfindung näher erläutern. Bei den Angaben in Teilen handelt es sich um Gewichtsteile sofern nicht anders erwähnt.

### Beispiele

### Beispiel 1 (nicht erfindungsgemäß)

Es wurden 173 Teile Vesuvin Base in 2500 Teilen eines Eis/Wassergemisches eingerührt. Zur Herstellung der Diazokomponente wurden 1300 Teile Wasser und 157 Teile 25 gew.-%ige Natronlauge vorgelegt und 170 Teile Sulfanilsäure darin gelöst. Zur Sulfanilsäure-Lösung wurden 1300 Teile Eis und 335 Teile 23 vol.-%ige Natriumnitrit Lösung zugegeben und durch Zugabe von 447 Teilen 20 %iger Salzsäure diazotiert. Nach einer kurzen Nachrührzeit wurde überschüssiges Nitrit durch Zugabe von Amidosulfonsäure zerstört.

Die Diazokomponente wurde zur Kupplungskomponente gegeben und mit Natronlauge ein pH - Wert von 5,0 - 6 eingestellt. Nach beendeter Kupplung wurde der pH-Wert durch Zusatz von Salzsäure auf pH 1 gestellt. Der feste Farbstoff wurde abfiltriert und mit Wasser salzfrei gewaschen und getrocknet. Man erhielt 360 g Farbstoff abzüglich 1,5 Gew.-% NaCl. Der Vesuvingehalt betrug 12 Gew.-% bezogen auf den Farbstoff.

### Beispiel 2 (nicht erfindungsgemäß)

20 Teile des nach dem Beispiel 1 erhaltenen Farbstoffs wurden als feuchter Presskuchen zusammen mit 5 Teilen 1,2-Propandiol in 72 Teilen verdünnter Natronlauge bei pH 10-12 gelöst.
Nach Klärfiltration wurde die Farbstofflösung direkt zur Papierfärbung eingesetzt.

### Allgemeine Versuchsvorschrift zu den Beispielen 3 - 7:

Zur Herstellung der Kupplungskomponente wurden 163 Teile m-Phenylendiamin in 900 Teilen Wasser und 45 Teilen 20%iger Salzsäure bei Raumtemperatur gelöst vorgelegt. Darin wurden 1300 Teile Eis eintragen. Danach wurden unter Rühren 76 Teile Natriumnitrit fest zugegeben. 395 Teile 20 %ige Salzsäure wurden innerhalb von 40 - 50 Minuten zudosiert und zur Vervollständigung der Reaktion nachgerührt. Mit 25 gew.-%iger Natronlauge wurde der pH auf 3 eingestellt und eine Stunde bei 3°C nachgerührt.

Zur Herstellung der Diazokomponente wurden 1300 Teile Wasser und 157 Teile 25 gew.-%ige Natronlauge vorgelegt und X Teile Sulfanilsäure darin gelöst. Zur Sulfanilsäure-Lösung wurden 1300 Teile Eis und Y Teile Natriumnitrit Lösung (23 vol.%ig) zugegeben und durch Zugabe von 447 Teilen 20%ige Salzsäure diazotiert. Nach einer kurzen Nachrührzeit wurde überschüssiges Nitrit durch Zugabe von Amidosulfonsäure zerstört.

Die Diazokomponente wurde zur Kupplungskomponente gegeben und mit Natronlauge ein pH-Wert von 5,0 - 6 eingestellt. Nach beendeter Kupplung wurde der pH-Wert durch Zusatz von Salzsäure auf pH 1 gestellt, der feste Farbstoff wurde abfiltriert und mit Wasser salzfrei gewaschen und getrocknet.

### Beispiel 3

Der Farbstoff wurde nach der allgemeinen Versuchsvorschrift hergestellt, wobei 144 Teile Sulfanilsäure (X) und 283 Teile Nitritlösung (Y) eingesetzt wurden. Man erhielt 332 g Farbstoff, abzüglich NaCl 0,84 Gew.-%. Der Vesuvingehalt betrug 15 Gew.-% bezogen auf den Farbstoff.

### Beispiel 4

Der Farbstoff wurde nach der allgemeinen Versuchsvorschrift hergestellt, wobei 170 Teile Sulfanilsäure (X) und 335 Teile Nitritlösung (Y) eingesetzt wurden. Man erhielt 350 g Farbstoff, abzüglich NaCl 0,46 Gew.-%. Der Vesuvingehalt betrug 12 Gew.-% bezogen auf den Farbstoff.

### Beispiel 5

Der Farbstoff wurde nach der allgemeinen Versuchsvorschrift hergestellt, wobei 183 Teile Sulfanilsäure (X) und 361 Teile Nitritlösung (Y) eingesetzt wurden. Man erhielt 390 g Farbstoff, abzüglich NaCl 1,3 Gew.-%. Der Vesuvingehalt betrug 10 Gew.-% bezogen auf den Farbstoff.

### Beispiel 6

Der Farbstoff wurde nach der allgemeinen Versuchsvorschrift hergestellt, wobei 170 Teile Sulfanilsäure (X) und 344 Teile Nitritlösung (Y) eingesetzt wurden. Man erhielt 347 g Farbstoff, abzüglich NaCl 1,3 Gew.-%. Der Vesuvingehalt betrug 6,8 Gew.-% bezogen auf den Farbstoff.

### Beispiel 7

Der Farbstoff wurde nach der allgemeinen Versuchsvorschrift hergestellt, wobei 177 Teile Sulfanilsäure (X) und 357 Teile Nitritlösung (Y) eingesetzt wurden. Man erhielt 352 g Farbstoff, abzüglich NaCl 0,16 Gew.-%. Der Vesuvingehalt betrug 5,8 Gew.-% bezogen auf den Farbstoff.

### Beispiel 8

20 Teile des nach den Beispielen 3 bis 7 erhaltenen Farbstoffs wurden als feuchter Presskuchen zusammen mit 5 Teilen 1,2-Propandiol in 75 Teilen verdünnter Natronlauge bei pH 10-12 gelöst. Nach Klärfiltration wurde die Farbstofflösung direkt zur Papierfärbung eingesetzt.

### Beispiel 9

20 Teile des nach den Beispielen 3 bis 7 erhaltenen Farbstoffs wurden als feuchter Presskuchen zusammen mit 5 Teilen 1,2-Propandiol in 75 Teilen verdünnter, wässriger Ammoniaklösung bei pH 9-10 gelöst. Nach Klärfiltration wurde die Farbstofflösung direkt zur Papierfärbung eingesetzt.

### Beispiel 10

23 Teile (ber. 100 %) des nach den Beispielen 3 bis 7 erhaltenen Farbstoffs wurden als feuchter Presskuchen zusammen mit 5 Teilen Neopentylglykol in 72 Teilen eines Gemisches aus verdünnter Natronlauge und 25 %-igem Ammoniak bei pH 9-10 gelöst (man erhält formal das 1/1 Natrium/Ammoniumsalz). Nach Klärfiltration wurde die Farbstofflösung direkt zur Papierfärbung eingesetzt.

### Beispiel 11

23 Teile (ber. 100 %) des nach den Beispielen 3 bis 7 erhaltenen Farbstoffs wurden als feuchter Presskuchen zusammen mit 1 Teil eines Ethylpolyethylenglykol (MW 400) in 76 Teilen eines Gemisches aus verdünnter Natronlauge und 25 %-igem Ammoniak bei pH 9-10 gelöst (man erhält formal das 1/1 Natrium/Ammoniumsalz). Nach Klärfiltration wurde die Farbstofflösung direkt zur Papierfärbung eingesetzt

### Beispiel 12

21 Teile (ber. 100 %) des nach den Beispielen 3 bis 7 erhaltenen Farbstoffs wurden als feuchter Presskuchen zusammen mit 5 Teilen eines Ethylpolyethylenglykols (MW 200) in 74 Teilen eines Gemisches aus verdünnter Natronlauge und 25 %-igem Ammoniak bei pH 9-10 gelöst (man erhält formal das 1/1 Natrium/Ammoniumsalz). Nach Klärfiltration wurde die Farbstofflösung direkt zur Papierfärbung eingesetzt

### Beispiel 13

23 Teile (ber. 100 %) des nach den Beispielen 3 bis 7 erhaltenen Farbstoffs wurden als feuchter Presskuchen zusammen mit 2,5 Teilen Harnstoff in 74,5 Teilen eines Gemisches aus verdünnter Natronlauge und 25 %-igem Ammoniak bei pH 9-10 gelöst (man erhält formal das 1/1 Natrium/Ammoniumsalz). Nach Klärfiltration wurde die Farbstofflösung direkt zur Papierfärbung eingesetzt.

## Patentansprüche

1. Verfahren zur Herstellung einer riussigfomrmlierung von Salzen sulfonsaurer Azofarbstoffe umfassend: a) Herstellen von Vesuvin aus m-Phenylendiamin; b) ohne Zwischenisolierung des Vesuvins Kuppeln einer wenigstens äquimolaren Menge von diazotierten Aminoarytsulfonsäuren I
H₂N - Ar - SO₃H (I),
wobei Ar Phenylen, das einfach mit Sulfo, oder Naphthylen, das ein- oder zweifach mit Sulfo und/oder einfach mit Hydroxy substituiert sein kann, bedeutet auf Vesuvin und c) Isolierung der Farbstoffe in ihrer Säureform und anschließendes Lösen in wässrigen Basen.

2. Verfahren zur Herstellung einer Flüssigformulierung nach Anspruch 1, **dadurch gekennzeichnet, dass** man ausgehend von o-, m- und/oder p-Aminobenzolsutfonsäure als Diazokomponente die Azofarbstoffe herstellt.

3. Verfahren zur Herstellung einer Flüssigformulierung nach Anspruch 1 oder 2, **dadurch gekennzeichnet, dass** man Vesuvin und Diazokomponente im stöchiometrischen Verhältnis 1 : 1 bis 1 : 4 einsetzt.

4. Verfahren zur Herstellung einer Flüssigformulierung nach einem der Ansprüche 1 bis 3, **dadurch gekennzeichnet, dass** man die Azofarbstoffe durch Einstellen des pH-Wertes auf 0 bis 4,5 isoliert.

5. Verfahren zur Herstellung einer Flüssigformulierung nach einem der Ansprüche 1 bis 4, **dadurch gekennzeichnet, dass** man durch schrittweises Ansäuern die Azofarbstoffe kristallisiert.

6. Verfahren zur Herstellung einer Flüssigformulierung nach einem der Ansprüche 1 bis 5, **dadurch gekennzeichnet, dass** man die sulfonsauren Azofarbstoffe in ihrer Säureform bei Temperaturen von 20 bis 70 °C kristallisiert.

## Claims

1. A process for preparing a liquid formulation of salts of sulfonated azo dyes, comprising a) preparing vesuvin from m-phenylenediamine; b) without interveningly isolating the vesuvin coupling an at least equimolar amount of diazotized aminoarylsulfonic acids I
H₂N - Ar - SO₃H (I),
where Ar is phenylene (which may be monosubstituted by sulfo) or naphthalene (which may be mono- or disubstituted by sulfo and/or monosubstituted by hydroxyl) onto vesuvin and c) isolating the dyes in their acid form and subsequently dissolving them in aqueous bases.

2. The process according to claim 1 wherein the azo dyes are prepared from o-, m- and/or p-aminobenzenesulfonic acid diazo component.

3. The process according to claim 1 or 2 wherein vesuvin and diazo component are used in a stoichiometric ratio in the range from 1 : 1 to 1 : 4.

4. The process according to any of claims 1 to 3 wherein the azo dyes are isolated by adjusting the pH to a value in the range from 0 to 4.5.

5. The process according to any of claims 1 to 4 wherein the azo dyes are crystallized by stepwise acidification.

6. The process according to any of claims 1 to 5 wherein the sulfonated azo dyes are crystallized in their acid form at from 20 to 70°C.

## Revendications

1. Procédé de préparation d'une formulation liquide de sels de colorants azoïques d'acide sulfonique comportant : a) une préparation de vésuvine à partir de m-phénylènediamine, b) sans isolement intermédiaire de la vésuvine, un couplage d'une quantité au moins équimolaire d'acides aminoarylsulfoniques diazotés I :
H₂N - Ar - SO₃H (I)
où Ar représente un groupe phénylène, qui peut être substitué à une reprise par un groupe sulfo, ou naphtylène, qui peut être substitué à une ou deux reprises par un groupe sulfo et/ou à une reprise par un groupe hydroxy, sur la vésuvine et c) un isolement des colorants sous leur forme acide et une dissolution ultérieure dans des bases aqueuses.

2. Procédé de préparation d'une formulation liquide suivant la revendication 1, **caractérisé en ce qu'**on prépare les colorants azoïques, en partant d'acide o-, m- et/ou p-aminobenzènesulfonique comme composants diazoïques.

3. Procédé de préparation d'une formulation liquide suivant la revendication 1 ou 2, **caractérisé en ce qu'**on met en oeuvre la vésuvine et les composants diazoïques dans un rapport stoechiométrique de 1/1 à 1/4.

4. Procédé de préparation d'une formulation liquide suivant l'une des revendications 1 à 3, **caractérisé en ce qu'**on isole les colorants azoïques par ajustement de la valeur du pH à 0 jusqu'à 4,5.

5. Procédé de préparation d'une formulation liquide suivant l'une des revendications 1 à 4, **caractérisé en ce qu'**on cristallise les colorants azoïques par une acidification graduelle.

6. Procédé de préparation d'une formulation liquide suivant l'une des revendications 1 à 5, **caractérisé en ce qu'**on cristallise les colorants azoïques d'acide sulfonique sous leur forme acide à des températures de 20 à 70°C.
